# EUROPÄISCHE PATENTANMELDUNG

(11) **EP 1 003 141 A1**
(43) Veröffentlichungstag der Anmeldung: **24.05.2000**
(21) Anmeldenummer: 99440305.3
(22) Anmeldetag: 10.11.1999
(51) Int. Cl.: G09B 5/06, G09B 5/14, G09B 7/04

(54) **Verfahren zur automatischen Erstellung und Überwachung eines Ablaufplans für einen Lernkurs duch einen Rechner**

(30) Priorität: 17.11.1998 DE 19852896
(71) Anmelder: ALCATEL, 75008 Paris (FR)
(72) Erfinder: Hägebarth, Frank, 74366 Kirchheim (DE)
(74) Vertreter: Rausch, Gabriele, Dr.

(57) **Zusammenfassung**

Die Erfindung betrifft ein Verfahren (1) zur automatischen Erstellung und Überwachung eines Ablaufplans für einen Lernkurs mit mindestens einer Lerneinheit durch einen Rechner. Um bei einem Verfahren (1) die Effizienz des Lernkurses zu erhöhen, schlägt die Erfindung ein Verfahren (1) vor, das durch die nachfolgenden Schritte gekennzeichnet ist:
- Bestimmung erster Zeiteinheiten durch den Rechner (2),
- Bestimmung zweiter Zeiteinheiten durch den Rechner (4),
- Erstellung eines Ablaufplans durch den Rechner für die Ausführung des Lernkurses in Abhängigkeit von den ersten Zeiteinheiten und den zweiten Zeiteinheiten (5), wobei der Ablaufplan für jede Lerneinheit einen Zeitpunkt festlegt, zu dem sie abgeschlossen sein soll, und
- Überwachung durch den Rechner, ob die entsprechende Lerneinheit zu dem in dem Ablaufplan festgelegten Zeitpunkt abgeschlossen ist (7).

## Beschreibung

Die vorliegende Erfindung betrifft ein Verfahren zur automatischen Erstellung und Überwachung eines Ablaufplans für einen Lernkurs mit mindestens einer Lerneinheit durch einen Rechner.

Die vorliegende Erfindung betrifft außerdem einen Rechner zur automatischen Erstellung und Überwachung eines Ablaufplans für einen Lernkurs mit mindestens einer Lerneinheit.

Der Rechner, auf dem ein derartiges Verfahren ausgeführt wird, ist in der Regel als ein Computer, insbesondere als ein Personal-Computer (PC) ausgebildet. Ein Verfahren der oben genannten Art wird im Rahmen von computergestütztem Lernen, dem sog. Computer-Based-Training (CBT), eingesetzt. CBT ist der Oberbegriff für interaktive Wissensvermittlung mittels eines Computers. Aus dem Stand der Technik ist ein CBT-Verfahren bekannt, das offline arbeitet und dem Lernenden die Lerneinheiten des Lernkurses von einem lokalen Speichermedium, bspw. einer CD-ROM, an einer Anzeigeeinheit des Computers zur Bearbeitung bereitstellt. Es sind aber auch CBT-Verfahren bekannt, die die Möglichkeiten moderner Rechnernetzwerke, bspw. eines firmeninternen Intranets oder des weltumspannenden Internets, zur Bereitstellung der Lerneinheiten des Lernkurses nutzen. Bei den CBT-Verfahren, die mit Rechnernetzwerken arbeiten, greift der Lernende mit seinem Computer über das Rechnernetzwerk auf einen bestimmten Rechner in dem Rechnernetzwerk, den sog. Server, zu. Auf dem Server sind die Lerneinheiten der Lernkurse, die Lernumgebung sowie Funktionen zur Verwaltung der Lernkurse abgelegt.

Bei den bekannten CBT-Verfahren legt der Lernende selbst fest, ob und zu welchen Zeiten er einen begonnenen Lernkurs bearbeiten möchte. Die Lerntätigkeit des Lernenden, insbesondere der Arbeitseinsatz für den Lernkurs, werden nicht überwacht. Er muß die Abarbeitung der einzelnen Lerneinheiten selbst planen, koordinieren und überwachen.

Durch die bekannten CBT-Verfahren wird der Lernprozess immer mehr in den Verantwortungsbereich des Lernenden verlagert. Dem Lernenden wird ein Höchstmaß an Eigeninitiative, Selbstdisziplin und Lernfähigkeit abverlangt.

Eines der größte Probleme ist dabei die Motivation des Lernenden, über einen längeren Zeitraum hinweg mit gleichbleibenden Einsatz den Lernkurs zu bearbeiten. In der Anfangsphase ist die neuartige Lernmethode des CBT für den Lernenden interessant. Die meisten Lernkurse erstrecken sich jedoch über einen längeren Zeitraum, der mehrere Lerneinheiten und mehrere Sitzungen umfassen kann. Für jede Sitzung bringt der Lernende eine bestimmte Zeitdauer für die Bearbeitung des Lernkurses auf. Der Zeitraum für die Bearbeitung des Lernkurses kann sich über Tage (bspw. für die Schulung von Verkaufspersonal für den Verkauf neuer Produkte), Wochen oder gar Monate (bspw. zum Erlernen einer neuen Fremdsprache) erstrecken.

Über längere Zeiträume nimmt die Motivation des Lernenden häufig stark ab, da bei dem CBT, anders als bei einem Präsenz-Lernkurs, dem sog. Classroom-Training, üblicherweise kein Kursleiter zugegen ist, der den Lernenden überwachen, antreiben oder motivieren kann. Für die Planung und Koordination des Lernkurses ist der Lernende beim CBT selbst verantwortlich. Die genaue Planung für derart lange Zeiträume ist jedoch kaum im Voraus möglich. Häufig wird deshalb auf eine Planung des Ablaufs des Lernkurses ganz verzichtet. Wenn der Lernende gerade Zeit und Lust hat, bearbeitet er eine oder mehrere Lerneinheiten des Lernkurses. Aufgrund dieser Problematik wird ein angefangenes CBT-Verfahren häufig nur schleppend fortgeführt oder gar abgebrochen. Das wiederum hat zur Folge, daß das Classroom-Training häufig wesentlich effizienter ist und bei den Lernenden einen besseren Lernerfolg erzielt als das CBT.

Eine Aufgabe der vorliegenden Erfindung besteht deshalb darin, ein Verfahren der eingangs genannten Art dahingehend auszugestalten und weiterzubilden, daß die Effizienz des Lernkurses erhöht wird.

Zur Lösung dieser Aufgabe schlägt die Erfindung ausgehend von dem Verfahren der eingangs genannten Art ein Verfahren vor, das durch die nachfolgenden Schritte gekennzeichnet ist:
- Bestimmung erster Zeiteinheiten durch den Rechner, die die Zeitdauer repräsentieren, die ein Lernender für den Lernkurs aufbringen möchte,
- Bestimmung zweiter Zeiteinheiten durch den Rechner, die die Zeitdauer repräsentieren, die notwendig ist, um die Lerneinheiten des Lernkurses auszuführen,
- Erstellung eines Ablaufplans durch den Rechner für die Ausführung des Lernkurses in Abhängigkeit von den ersten Zeiteinheiten und den zweiten Zeiteinheiten, wobei der Ablaufplan für jede Lerneinheit einen Zeitpunkt festlegt, an dem von dem Lernenden erwartet wird, die entsprechende Lerneinheit abgeschlossen zu haben, und
- Überwachung durch den Rechner, ob die entsprechende Lerneinheit zu dem in dem Ablaufplan festgelegten Zeitpunkt abgeschlossen ist.

Erfindungsgemäß ist erkannt worden, daß die Effizienz von CBT-Verfahren vor allem dadurch erhöht werden kann, daß der Lernende in seiner Lerntätigkeit, insbesondere bezüglich seines zeitlichen Einsatzes für die Bearbeitung der Lerneinheiten des Lernkurses, überwacht wird. Zur Überwachung des Lernenden wird, anders als beim Classroom-Training, kein Kursleiter benötigt. Vielmehr erfolgt die Überwachung automatisch mittels eines Rechners. Zur Überwachung des Lernenden wird zunächst anhand von Vorgaben des Lernenden oder anhand von in dem Rechner abgelegten Angaben ein Ablaufplan für die Ausführung des Lernkurses erstellt. Während des Lernkurses überwacht der Rechner dann die Einhaltung dieses Ablaufplans.

Bei dem erfindungsgemäßen Verfahren werden im einzelnen die nachfolgenden Schritte ausgeführt. Zu Beginn eines Lernkurses fragt der Rechner den Lernenden, welchen Lernkurs er bearbeiten möchte. Des weiteren gibt der Lernende an, in welchem Zeitraum er den Lernkurs bearbeiten möchte. Schließlich gibt der Lernende erste Zeiteinheiten an, die die Zeitdauer repräsentieren, die er innerhalb dieses Zeitraums für den Lernkurs aufbringen möchte. Die ersten Zeiteinheiten umfassen bspw. die Anzahl der Stunden, die der Lernende pro Tag lernen möchte, oder Angaben darüber, ob er an Wochenden oder Feiertagen lernen möchte.

Die Bestimmung der ersten Zeiteinheiten kann durch eine unmittelbare Eingabe der gewünschten Zeitangaben durch den Lernenden erfolgen. Es ist aber auch denkbar, daß der Rechner verschiedene Personengruppen zur Auswahl durch den Lernenden bereithält. Jeder dieser Personengruppen sind bestimmte Lernverhaltensmuster, insbesondere erste Zeiteinheiten, zugewiesen. Zur Bestimmung der ersten Zeiteinheiten wählt der Lernende einfach einen dieser Personengruppen aus.

Des weiteren bestimmt der Rechner die zweiten Zeiteinheiten, die die Zeitdauer repräsentieren, die notwendig ist, um die Lerneinheiten des Lernkurses auszuführen. Die zweiten Zeiteinheiten können entweder in dem Rechner vordefiniert sein, oder aber sie sind den in dem Rechner gespeicherten Personengruppen zugeordnet und werden anhand der von dem Lernenden ausgewählten Personengruppe bestimmt. Schließlich ist es auch denkbar, daß der Lernende individuell die Zeit eingibt, die er glaubt für die Bearbeitung eines Lernkurses zu benötigen.

In Abhängigkeit der ersten Zeiteinheiten und der zweiten Zeiteinheiten erstellt der Rechner dann automatisch einen Ablaufplan für die Ausführung des Lernkurses. In dem Ablaufplan ist genau festgelegt, welche Lerneinheit dem Lernenden wann bereitgestellt wird. Außerdem ist in dem Ablaufplan für jede Lerneinheit ein Zeitpunkt bestimmt, an dem von dem Lernenden erwartet wird, die entsprechende Lerneinheit abgeschlossen zu haben.

Während des Ablaufs des Lernkurses überwacht der Rechner, ob die entsprechende Lerneinheit zu dem in dem Ablaufplan bestimmten Zeitpunkt abgeschlossen ist. Falls der Ablaufplan nicht eingehalten wird, kann der Rechner geeignete Maßnahmen ergreifen. Diese Maßnahmen können, ähnlich wie bei einem Kursleiter eines Classroom-Trainings, darin bestehen, den Lernenden auf den Zeitverzug hinzuweisen, dem Lernenden als Strafe zusätzliche Lerneinheiten zur Bearbeitung bereitzustellen, den Zeitraum des Lernkurses zu verlängern oder als letzte Maßnahme den Lernenden von dem Lernkurs auszuschließen.

Mittels des erfindungsgemäßen Verfahrens ist es erstmals möglich, den zeitlichen Einsatz des Lernenden ohne einen Kursleiter zu überwachen. Dadurch kann die Motivation des Lernenden und der mittels CBT erzielbare Lernerfolg entscheidend erhöht werden. Das erfindungsgemäße Verfahren weist eine besonders große Effizienz auf, da es die Vorzüge des Classroom-Trainings (Überwachung des Arbeitseinsatzes des Lernenden) mit den Vorzügen des CBT (Faszination des Lernenden durch eine ansprechende multimediale Ausgestaltung der Lerneinheiten) verbindet.

Gemäß einer vorteilhaften Weiterbildung der Erfindung wird vorgeschlagen, daß der Lernende benachrichtigt wird, falls die entsprechende Lerneinheit nicht zu dem in dem Ablaufplan festgelegten Zeitpunkt abgeschlossen worden ist. Häufig wird der Lernende erst durch eine Benachrichtigung seines Versäuminsses bewußt. Außerdem wird der Lernende durch die Benachrichtigung in der Regel dazu animiert, mehr Zeit für den Lernkurs aufzuwenden. Der Lernende hat das Gefühl, daß er überwacht wird, und entwickelt einen Ehrgeiz, die zeitlichen Vorgaben für den Lernkurs zu erfüllen. In der Folge wird er sich wieder mehr für den Lernkurs einsetzen.

Gemäß einer vorteilhaften Ausführungsform wird vorgeschlagen, daß das Ergebnis der Überwachung gespeichert wird. Auf die gespeicherten Überwachungsergebnisse kann dann jederzeit zugegriffen werden. Sie können dazu verwendet werden, am Ende des Lernkurses eine Art Zeugnis zu erstellen, oder dem Lernenden eine Kontrolle seiner Lernfortschritte bzw. seines Stands in dem Lernkurs während des Lernkurses zu ermöglichen. Bei mehreren Lernenden, die unabhängig voneinander an einem gemeinsamen Lernkurs arbeiten, besteht beim CBT üblicherweise kaum ein Konkurrenzdenken, da der eine Lernende in der Regel keine Informationen von den anderen Lernenden hat. Um zwischen mehreren Lernenden ein Konkurrenzdenken und dadurch mehr Einsatz zu erzeugen, können die Überwachungsergebnisse der Lernenden auch für jeden Lernenden eines Lernkurses zugänglich veröffentlicht werden. Die Veröffentlichung kann bspw. an einem schwarzen Brett oder aber auf einer bestimmten Web-Seite in einem Rechnernetzwerk erfolgen, auf die alle Teilnehmer eines Lernkurses Zugriff haben.

Um den Ablaufplan während des Lernkurses an neue Gegebenheiten anpassen zu können, wird gemäß einer vorteilhaften Weiterbildung vorgeschlagen, daß der Ablaufplan neu erstellt wird, falls die entsprechende Lerneinheit nicht zu dem in dem Ablaufplan festgelegten Zeitpunkt abgeschlossen ist. Dadurch wird der Lernende nicht unter einen zu großen Zeitdruck gestellt, wenn er die von dem Ablaufplan gesteckten zeitlichen Vorgaben für eine Lerneinheit nicht einhalten kann. Stattdessen wird der Ablaufplan an die neuen Gegebenheiten angepaßt, bspw. indem der Zeitpunkt, an dem von dem Lernenden erwartet wird, die entsprechende Lerneinheit abgeschlossen zu haben, zeitlich nach hinten verlegt wird.

Bei der Neuerstellung des Ablaufplans können neue Werte für die ersten und zweiten Zeiteinheiten berücksichtigt werden. Das kann dann nützlich sein, wenn abzusehen ist, daß der Lernende in Zukunft weniger Zeit für den Lernkurs aufbringen kann. Es ist auch denkbar, den Ablaufplan neu zu erstellen, wenn neue Gegebenheiten vorliegen, die den in dem Ablaufplan gesteckten Zeitrahmen des Lernkurses beeinflussen, bspw. wenn der Lernende den Lernkurs innerhalb einer kürzeren Zeitdauer als ursprünglich vorgesehen durcharbeiten möchte.

Gemäß einer besonders bevorzugten Weiterbildung wird vorgeschlagen, daß der Lernkurs abgebrochen wird, falls die entsprechenden Lerneinheit mehrmals nicht zu dem in dem Ablaufplan festgelegten Zeitpunkt abgeschlossen ist. Die Anzahl der Male, die der in dem Ablaufplan festgelegte Zeitpunkt überschritten werden darf, bevor der Lernkurs abgebrochen wird, kann frei bestimmt werden. Bei einer sehr strengen Handhabung des Verfahrens ist es denkbar, den Lernkurs bereits nach einem einzigen Überschreiten des in dem Ablaufplan festgelegten Zeitpunkts abzubrechen. Bei einem Lernkurs, der auf freiwilliger Basis durchgeführt wird, kann ein häufiges Überschreiten des festgelegten Zeitpunkts zugelassen werden, bevor der Lernkurs abgebrochen wird. Bei einer Wiederaufnahme des Lernkurses nach dem Abbruch muß der Lernkurs wieder von vorne durchlaufen werden. Der Lernende wird vorzugsweise über den Abbruch des Lernkurses benachrichtigt.

Um den Lernenden darüber zu informieren, wie der erstellte Ablaufplan des Lernkurses aussieht, wird vorgeschlagen, daß der Ablaufplan nach der Erstellung an den Lernenden übermittelt wird. Der Lernende kann sich dann ggf. auf bestimmte Lerneinheiten vorbereiten.

Gemäß einer anderen besonders bevorzugten Weiterbildung der Erfindung wird vorgeschlagen, daß die Lerneinheiten dem Lernenden über ein Rechnernetzwerk bereitgestellt werden.

Vorteilhafterweise werden die Lerneinheiten dem Lernenden über ein firmeninternes Rechnernetzwerk (Intranet) bereitgestellt. Alternativ oder zusätzlich wird vorgeschlagen, daß die Lerneinheiten dem Lernenden über ein weltumspannendes Rechnernetzwerk, insbesondere über das Internet, bereitgestellt werden.

Auf dem Rechnernetzwerk kann der Lernende vorteilhafterweise mittels Electronic-Mail (E-Mail) darüber benachrichtigt werden, daß die entsprechende Lerneinheit nicht zu dem in dem Ablaufplan festgelegten Zeitpunkt abgeschlossen oder daß der Lernkurs abgebrochen worden ist. Auch die Übermittlung des Ablaufplans kann gemäß einer bevorzugten Ausführungsform mittels Electronic-Mail (E-Mail) an den Lernenden erfolgen. Alternativ wird vorgeschlagen, daß der Ablaufplan auf einer Web-Seite bereitgestellt wird, auf die der Lernende Zugriff hat. Auf der Web-Seite können auch die Lernfortschritte des Lernenden oder andere Informationen bezüglich des Lernkurses bereitgestellt werden.

Von besonderer Bedeutung ist die Realisierung des erfindungsgemäßen Verfahrens in der Form eines Steuerelements für einen Rechner. Dabei ist auf dem Steuerelement ein Programm abgespeichert, das auf dem Rechner ablauf fähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise eine Compact Disc (CD), eine Diskette oder dergleichen.

Eine weitere Aufgabe der vorliegenden Erfindung besteht darin, einen Rechner der eingangs genannten Art dahingehend auszugestalten und weiterzubilden, daß die Effizienz des Lernkurses erhöht wird.

Zur Lösung dieser Aufgabe schlägt die Erfindung ausgehend von dem Rechner der eingangs genannten Art vor, daß der Rechner aufweist:
- Mittel zur Bestimmung erster Zeiteinheiten, die die Zeitdauer repräsentieren, die ein Lernender für den Lernkurs aufbringen möchte,
- Mittel zur Bestimmung zweiter Zeiteinheiten, die die Zeitdauer repräsentieren, die notwendig ist, um die Lerneinheiten des Lernkurses auszuführen,
- Mittel zur Erstellung eines Ablaufplans durch den Rechner für die Ausführung des Lernkurses in Abhängigkeit von den ersten Zeiteinheiten und den zweiten Zeiteinheiten, wobei der Ablaufplan für jede Lerneinheit einen Zeitpunkt festlegt, an dem von dem Lernende erwartet wird, die entsprechende Lerneinheit abgeschlossen zu haben, und
- Mittel zur Überwachung durch den Rechner, ob die entsprechende Lerneinheit zu dem in dem Ablaufplan festgelegten Zeitpunkt abgeschlossen ist.

Gemäß einer bevorzugten Weiterbildung wird vorgeschlagen, daß der Rechner Mittel zur Benachrichtigung des Lernenden aufweist, falls die entsprechende Lerneinheit nicht zu dem in dem Ablaufplan festgelegten Zeitpunkt abgeschlossen ist.

Vorteilhafterweise weist der Rechner Mittel zur Speicherung des Ergebnisses der Überwachung auf.

Gemäß einer bevorzugten Ausführungsform weist der Rechner Mittel zur Übermittlung des Ablaufplans nach der Erstellung an den Lernenden auf.

Gemäß einer anderen Weiterbildung der vorliegenden Erfindung ist der Rechner an ein Rechnernetzwerk angeschlossen. Der Rechner ist vorzugsweise an ein firmeninternes Rechnernetzwerk (Intranet) angeschlossen. Alternativ wird vorgeschlagen, daß der Rechner an ein weltumspannendes Rechnernetzwerk, insbesondere an das Internet, angeschlossen ist.

Im folgenden wird eine bevorzugte Ausführungsform der vorliegenden Erfindung anhand der Zeichnungen näher erläutert. Es zeigt:

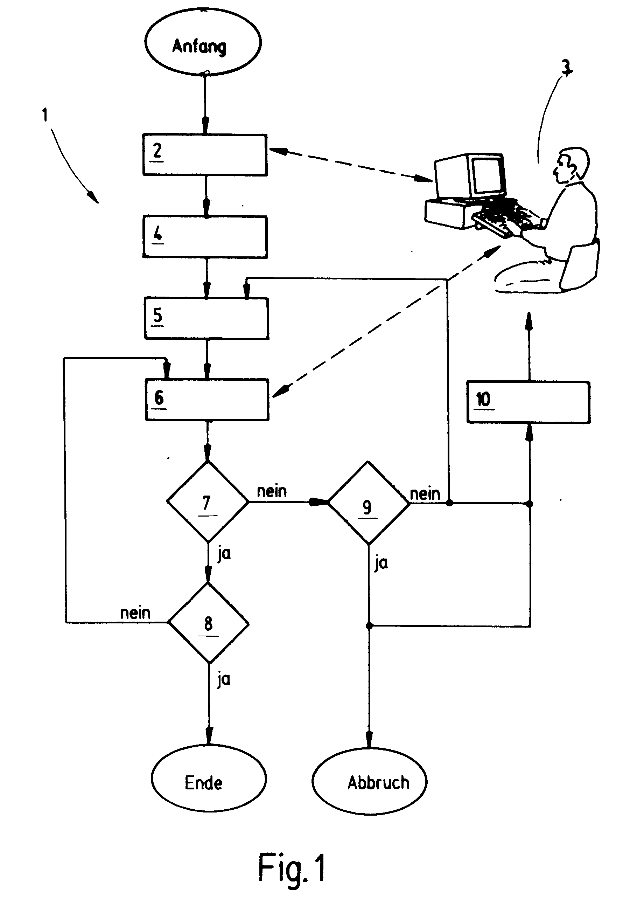

- Fig. 1: ein Ablaufdiagramm des erfindungsgemäßen Verfahrens.

In Fig. 1 ist das erfindungsgemäße Verfahren in seiner Gesamtheit mit dem Bezugszeichen 1 gekennzeichnet. Das Verfahren 1 dient zur automatischen Erstellung und Überwachung eines Ablaufplans für einen Lernkurs mit mindestens einer Lerneinheit durch einen Rechner. Zu Beginn des Verfahrens 1 werden in einem Schritt 2 erste Zeiteinheiten bestimmt, die die Zeitdauer repräsentieren, die ein Lernender 3 für den Lernkurs aufbringen möchte. Die ersten Zeiteinheiten können entweder, wie in Figur 1 dargestellt, durch Interaktion (gestrichelte Linie) mit dem Lernenden 3 durch den Rechner bestimmt werden. Die ersten Zeiteinheiten können aber auch durch den Rechner automatisch bestimmt werden. So kann der Rechner bspw. abhängig von einer Personengruppe, der der Lernende angehört, bestimmte Werte für die ersten Zeiteinheiten bestimmen.

In einem nachfolgenden Schritt 4 werden zweite Zeiteinheiten durch den Rechner automatisch bestimmt. Die zweiten Zeiteinheiten repräsentieren die Zeitdauern, die notwendig sind, um die Lerneinheiten des Lernkurses auszuführen.

In einem nachfolgenden Schritt 5 wird ein Ablaufplan durch den Rechner automatisch erstellt. In dem Ablaufplan ist für jede Lerneinheit ein Zeitpunkt festgelegt, an dem von dem Lernenden 3 erwartet wird, die entsprechende Lerneinheit abgeschlossen zu haben.

In einem anschließenden Schritt 6 des Verfahrens 1 wird die erste Lerneinheit des Lernkurses bereitgestellt. Diese Lerneinheit wird von dem Lernenden 3 interaktiv (gestrichelte Linie) durchgearbeitet bzw. ausgeführt. In einer nachfolgenden Abfrage 7 wird überprüft, ob die erste Lerneinheit zu dem in dem Ablaufplan festgelegten Zeitpunkt abgeschlossen wurde. Falls dies der Fall ist, wird in einer anschließenden Abfrage 8 überprüft, ob dem Lernenden 3 bereits alle Lerneinheiten dieses Lernkurses bereitgestellt wurden. Falls dies nicht der Fall ist, verzweigt das Verfahren an dieser Stelle zu dem Schritt 6 und stellt dem Lernenden die nächste Lerneinheit bereit.

Falls die Lerneinheit nicht zu dem festgelegten Zeitpunkt abgeschlossen wurde (Abfrage 7) wird in einer weiteren Abfrage 9 überprüft, ob das bereits mehrmals der Fall war. Ist dem so, wird der Lernkurs an dieser Stelle abgebrochen und dem Lernenden 3 wird eine entsprechende Benachrichtung zugesandt (Schritt 10). War es noch nicht mehrmals der Fall, wird dem Lernenden 3 in dem Schritt 10 eine Benachrichtigung übermittelt, die ihn darauf hinweist, dass er die entsprechende Lerneinheit nicht zu dem in dem Ablaufplan festgelegten Zeitpunkt abgeschlossen hat. Darüber hinaus verzweigt das Verfahren 1 an dieser Stelle zu dem Schritt 5, wo dann ein neuer Ablaufplan erstellt wird. In dem neuen Ablaufplan werden die noch nicht bearbeiteten Lerneinheiten insgesamt zeitlich nach hinten versetzt, oder aber es werden größere zeitliche Abstände zwischen den noch nicht bearbeiteten Lerneinheiten gesetzt. In dem nachfolgenden Schritt 6 wird dem Lernenden 3 diejenige Lerneinheit bereitgestellt, die er bisher noch nicht bearbeitet hat. Die Erstellung eines neuen Ablaufplans in Schritt 5 hat keinen Einfluß auf den Ablauf der Lerneinheiten des Lernkurses. Erst wenn eine Lerneinheit bearbeitet wurde, wird dem Lernenden die nächste Lerneinheit bereitgestellt.

Wenn alle Lerneinheiten des Lernkurses dem Lernenden 3 bereitgestellt wurden (Abfrage 8), dann wird der Lernkurs beendet.

Es ist denkbar, nach der Erstellung eines Ablaufplans (Schritt 5) dem Lernenden 3 den Ablaufplan zu übermitteln (nicht dargestellt). Die Lerneinheiten werden dem Lernenden 3 über ein Rechnernetzwerk bereitgestellt (Schritt 6). Das Rechnernetzwerk kann als ein firmeninternes Intranet oder als das weltumspannende Internet ausgebildet sein.

Die Benachrichtigung des Lernenden 3 (Schritt 10) darüber, dass er die entsprechende Lerneinheit nicht zu dem in dem Ablaufplan festgelegten Zeitpunkt abgeschlossen hat oder darüber, dass der Lernkurs abgebrochen wird, kann mittels Electronic-Mail (E-Mail) erfolgen.

## Patentansprüche

1. Verfahren (1) zur automatischen Erstellung und Überwachung eines Ablaufplans für einen Lernkurs mit mindestens einer Lerneinheit durch einen Rechner, **gekennzeichnet durch** die nachfolgenden Schritte
- Bestimmung erster Zeiteinheiten durch den Rechner, die die Zeitdauer repräsentieren, die ein Lernender (3) für den Lernkurs aufbringen möchte (2),
- Bestimmung zweiter Zeiteinheiten durch den Rechner, die die Zeitdauer repräsentieren, die notwendig ist, um die Lerneinheiten des Lernkurses auszuführen (4),
- Erstellung eines Ablaufplans durch den Rechner für die Ausführung des Lernkurses in Abhängigkeit von den ersten Zeiteinheiten und den zweiten Zeiteinheiten (5), wobei der Ablaufplan für jede Lerneinheit einen Zeitpunkt festlegt, an dem von dem Lernenden (3) erwartet wird, die entsprechende Lerneinheit abgeschlossen zu haben, und
- Überwachung durch den Rechner, ob die entsprechende Lerneinheit zu dem in dem Ablaufplan festgelegten Zeitpunkt abgeschlossen ist (7).

2. Verfahren (1) nach Anspruch 1, dadurch gekennzeichnet, daß der Lernende (3) benachrichtigt wird, falls die entsprechende Lerneinheit nicht zu dem in dem Ablaufplan festgelegten Zeitpunkt abgeschlossen ist (10).

3. Verfahren (1) nach Anspruch 1 oder 2, dadurch gekennzeichnet, daß das Ergebnis der Überwachung gespeichert wird.

4. Verfahren (1) nach einem der Ansprüche 1 bis 3, dadurch gekennzeichnet, daß der Ablaufplan neu erstellt wird (5), falls die entsprechende Lerneinheit nicht zu dem in dem Ablaufplan festgelegten Zeitpunkt abgeschlossen ist (9).

5. Verfahren (1) nach Anspruch 4, dadurch gekennzeichnet, daß der Lernkurs abgebrochen wird, falls die entsprechende Lerneinheit mehrmals nicht zu dem in dem Ablaufplan festgelegten Zeitpunkt abgeschlossen ist (9).

6. Verfahren (1) nach Anspruch 5, dadurch gekennzeichnet, daß der Lernende (3) über den Abbruch des Lernkurses benachrichtigt wird (10).

7. Verfahren (1) nach einem der Ansprüche 1 bis 6, dadurch gekennzeichnet, daß der Ablaufplan nach der Erstellung an den Lernenden (3) übermittelt wird.

8. Verfahren (1) nach einem der Ansprüche 1 bis 7, dadurch gekennzeichnet, daß die Lerneinheiten dem Lernenden (3) über ein Rechnernetzwerk bereitgestellt werden (9).

9. Verfahren (1) nach Anspruch 8, dadurch gekennzeichnet, daß die Lerneinheiten dem Lernenden (3) über ein firmeninternes Rechnernetzwerk (Intranet) bereitgestellt werden.

10. Verfahren (1) nach Anspruch 8 oder 9, dadurch gekennzeichnet, daß die Lerneinheiten dem Lernenden (3) über ein weltumspannendes Rechnernetzwerk, insbesondere über das Internet, bereitgestellt werden.

11. Verfahren (1) nach Anspruch 9 oder 10, dadurch gekennzeichnet, daß der Lernende (3) mittels Electronic-Mail (E-Mail) benachrichtigt wird.

12. Verfahren (1) nach einem der Ansprüche 9 bis 11, dadurch gekennzeichnet, daß der Ablaufplan mittels Electronic-Mail (E-Mail) an den Lernenden (3) übermittelt wird.

13. Verfahren (1) nach einem der Ansprüche 9 bis 12, dadurch gekennzeichnet, daß der Ablaufplan auf einer Web-Seite bereitgestellt wird, auf die der Lernende (3) Zugriff hat.

14. Steuerelement, insbesondere Compact Disc (CD), Diskette oder dergleichen, für einen Rechner, auf dem ein Programm abgespeichert ist, das auf dem Rechner ablauffähig und zur Ausführung eines Verfahrens nach einem der Ansprüche 1 bis 13 geeignet ist.

15. Rechner zur automatischen Erstellung und Überwachung eines Ablaufplans für einen Lernkurs mit mindestens einer Lerneinheit, **dadurch gekennzeichnet,** daß der Rechner aufweist:
- Mittel zur Bestimmung erster Zeiteinheiten, die die Zeitdauer repräsentieren, die ein Lernender (3) für den Lernkurs aufbringen möchte,
- Mittel zur Bestimmung zweiter Zeiteinheiten, die die Zeitdauer repräsentieren, die notwendig ist, um die Lerneinheiten des Lernkurses auszuführen,
- Mittel zur Erstellung eines Ablaufplans durch den Rechner für die Ausführung des Lernkurses in Abhängigkeit von den ersten Zeiteinheiten und den zweiten Zeiteinheiten, wobei der Ablaufplan für jede Lerneinheit einen Zeitpunkt festlegt, an dem von dem Lernende (3) erwartet wird, die entsprechende Lerneinheit abgeschlossen zu haben, und
- Mittel zur Überwachung durch den Rechner, ob die entsprechende Lerneinheit zu dem in dem Ablaufplan festgelegten Zeitpunkt abgeschlossen ist.

16. Rechner nach Anspruch 15, dadurch gekennzeichnet, daß der Rechner Mittel zur Benachrichtigung des Lernenden (3) aufweist, falls die entsprechende Lerneinheit nicht zu dem in dem Ablaufplan festgelegten Zeitpunkt abgeschlossen worden ist.

17. Rechner nach Anspruch 15 oder 16, dadurch gekennzeichnet, daß der Rechner Mittel zur Speicherung des Ergebnisses der Überwachung aufweist.

18. Rechner nach einem der Ansprüche 15 bis 17, dadurch gekennzeichnet, daß der Rechner Mittel zur Übermittlung des Ablaufplans nach der Erstellung an den Lernenden (3) aufweist.

19. Rechner nach einem der Ansprüche 15 bis 18, dadurch gekennzeichnet, daß der Rechner an eine Rechnernetzwerk angeschlossen ist.

20. Rechner nach Anspruch 19, dadurch gekennzeichnet, daß der Rechner an ein firmeninternes Rechnernetzwerk (Intranet) angeschlossen ist.

21. Rechner nach Anspruch 19, dadurch gekennzeichnet, daß der Rechner an ein weltumspannendes Rechnernetzwerk, insbesondere an das Internet, angeschlossen ist.
